Europäisches Patentamt

European Patent Office

Office européen des brevets

(11) Veröffentlichungsnummer: **0 047 929 B1**

# EUROPÄISCHE PATENTSCHRIFT

(45) Veröffentlichungstag der Patentschrift:
20.03.85

(51) Int. Cl.⁴: **D 01 F 2/00,** C 08 L 1/02, C 08 J 5/18

(21) Anmeldenummer: **81106940.0**

(22) Anmeldetag: **04.09.81**

(54) **Cellulose-Form-und-Spinnmasse mit geringen Anteilen an niedermolekularen Abbauprodukten sowie Verfahren zur Herstellung und Verwendung zu Formkörpern.**

(30) Priorität: **13.09.80 DE 3034685**

(43) Veröffentlichungstag der Anmeldung:
**24.03.82 Patentblatt 82/12**

(45) Bekanntmachung des Hinweises auf die Patenterteilung:
**20.03.85 Patentblatt 85/12**

(84) Benannte Vertragsstaaten:
**AT BE CH FR GB IT LI LU NL SE**

(56) Entgegenhaltungen:
**DE - A - 2 000 082**
**DE - A - 2 830 685**
**DE - B - 1 147 752**

**CHEMICAL ABSTRACTS, Band 85, 1976, Seite 122, Nr. 79970c, Columbus Ohio (USA);**

(73) Patentinhaber: **Akzo GmbH,**
**Postfach 10 01 49 Kasinostrasse 19-23,**
**D-5600 Wuppertal-1 (DE)**

(72) Erfinder: **Brandner, Alexander, Dr. Dipl.-Chem., Dr. Jordanstrasse 12a, D-8765 Erlenbach/Main (DE)**
Erfinder: **Zengel, Hans-Georg, Dr. Dipl.-Ing., Nordring 6, D-8751 Kleinwallstadt (DE)**

ACTORUM AG

# Beschreibung

Verfahren zur Herstellung von Cellulose-Lösungen, die als Form- bzw. Spinnmassen eingesetzt werden, sind mit dem Nachteil behaftet, dass beim Löseprozess die Cellulose einen beträchtlichen Abbau der Polymerkette erleidet. Die Folge davon ist, dass die Lösungen sich in unerwünschter Weise verfärben. Das führt wiederum zur Verfärbung der aus den Lösungen hergestellten Formkörper, wie Fäden oder Membranen.

Die nach der Fällung der Cellulose anfallende und zu verwerfende, verfärbte Lösung belastet in beachtenswertem Umfange die Umwelt, so dass – bei dem heutigen ständig wachsenden Umweltschutzbewusstsein – eine Aufbereitung bzw. Reinigung der durch cellulosische Abbauprodukte verunreinigten Abwässer durch aufwendige und damit kostspielige Verfahren auf die Dauer nicht zu umgehen ist.

Der Abbau der Polymerkette der Cellulose ist aber auch unerwünscht, weil er die technologischen Eigenschaften der aus den Cellulose-Lösungen hergestellten Formkörper beeinträchtigt, und zwar die Festigkeiten sowohl bei Membranen und Hohlfäden als auch bei Fäden verringert.

Man ist daher darum bemüht gewesen, zum einen die Löse- und Verarbeitungstemperatur möglichst niedrig und zum anderen die Lösedauer und die Dauer der Verarbeitung der Lösungen zu Formkörpern möglichst kurz zu halten, weil der Polymerabbau mit steigender Löse- und Verarbeitungstemperatur sowie steigender Löse- und Verarbeitungsdauer zunimmt.

Aber selbst bei verhältnismässig niedriger Löse- und Verarbeitungstemperatur und selbst wenn man die Löse- und Verarbeitungsdauer (beispielsweise durch Verwendung eines Doppelschneckenextruders) kurz hält, ist der Polymerabbau noch unvertretbar hoch.

Es hat daher nicht an Versuchen gefehlt, die darauf abzielten, den Polymerabbau beim Löse- und Verarbeitungsprozess der Cellulose zumindest in engen Grenzen zu halten.

Allen diesen Versuchen ist aber bisher der Erfolg versagt geblieben.

Erst mit der vorliegenden Erfindung ist es gelungen, den Polymerabbau so stark zu begrenzen, dass die Lösungen nur noch geringfügig verfärbt sind und die aus den Lösungen hergestellten Formkörper beträchtlich verbesserte technologische Eigenschaften, insbesondere Festigkeiten, aufweisen.

Die bei den bisher bekannten Verfahren aufgetretenen Probleme werden dadurch überwunden.

Als Lösungsmittel für Cellulose haben sich neben den klassischen wie Xanthogenat und Cuoxam besonders tertiäre Aminoxide bewährt und es sind in jüngster Zeit eine Reihe von Verfahren zur Herstellung derartiger Lösungen als Form- und Spinnmassen sowie zur Herstellung von Formkörpern aus diesen Lösungen entwickelt worden, die auf der Basis von tertiären Aminoxiden als Lösungsmittel arbeiten (DE-A 2 830 683, DE-A 2 830 684 und DE-A 2 830 685). Die vorliegende Erfindung baut auf diesen Verfahren auf, indem sie als Lösungsmittel für Cellulose auch tertiäre Aminoxide einsetzt.

Aufgabe der Erfindung war es, Cellulose-Lösungen als Form- bzw. Spinnmassen mit nur geringen Anteilen an niedermolekularen Abbauprodukten durch Lösen von Cellulose in einem tertiären Aminoxid, insbesondere N-Methyl-morpholin-N-oxid, zur Verfügung zu stellen.

Das erfindungsgemässe Verfahren ist dadurch gekennzeichnet, dass die Form- bzw. Spinnmasse als Zusatzstoff einzeln oder im Gemisch organische Verbindungen, die wenigstens 4 Kohlenstoffatome und wenigstens zwei konjungierte Doppelbindungen und wenigstens zwei Gruppen und zwar Hydroxyl und/oder Aminogruppen mit wenigstens einem Wasserstoffatom besitzen und/oder Glycerinaldehyd enthält.

Überraschenderweise wurde gefunden, dass durch den Zusatz der organischen Verbindung der Abbau der Polymerkette der Cellulose erheblich vermindert wird, so dass nur noch schwach gefärbte Form- bzw. Spinnmassen und aus diesen durch Fällung in Wasser Formkörper erhalten werden, die sich durch verbesserte Festigkeit auszeichnen.

Die erfindungsgemässen Form- und Spinnmassen können bis zu 10 Gew.-% andere Polymere enthalten, die sich in tertiären Aminoxiden lösen wie beispielsweise Cellulosederivate, Chitosen, Polyamid, Polyacrylate, Polyvinylalkohol, etc.

Die Verwendung von Redukton-Zusätzen, wie L/+)Ascorbinsäure, Trioseredukton und Reduktinsäure zur Herabsetzung der Autoxydationsneigung von Soja- oder Baumwollsamenöl ist bereits bekannt /Nippon Nogei Kagaku Kaishi 45 (1971), Seite 489; Chemical Abstracts Vol. 77, 3944 m (1972). Diese Ölse weisen einen hohen Gehalt an mehrfach ungesättigten Fettsäuren, insbesondere an Linolsäure, auf. Die in diesen Fettsäuren enthaltenen Kohlenstoff-Doppelbindungen werden bei Raumtemperatur allmählich von Luftsauerstoff angegriffen. Als Folge davon tritt eine Verfärbung der Öle ein. Durch den Zusatz von Reduktonen wird erreicht, dass der Luftsauerstoffangriff verlangsamt wird und dadurch die Öle länger haltbar bleiben.

Ebenfalls bekannt ist, Sonnenblumenöl und Linolsäuremethylester zur Verminderung der Autoxydationsneigung bzw. zur Erhöhung der Haltbarkeit Ascorbinsäure und Citronensäure zuzusetzen. Aus der US-PS 3 649 585 ist weiter ein Verfahren bekannt, bei dem zur Erhöhung der Hitzestabilität einem mit Äthylendiamin-bis-stearamid modifizierten ABS-Polymeren Gallussäure zugesetzt wird.

Schliesslich ist aus einer japanischen Patentschrift bekannt, dass durch Zusatz von Ascorbinsäure zur Sauerstoffbleiche von Zellstoff Celluloseprodukte mit deutlich höheren Polymerisationsgraden (DP) erhalten werden, als das der Fall ist, wenn ohne Ascrobinsäurezusatz gebleicht wird (Japan. Kokai 7 638 508).

Aus der DE-A 2 000 082 ist ein Verfahren bekannt, bei dem zur Verhinderung des Abbaues von Alkalicellulose vor, während oder untmittelbar nach ihrer Alkalisierung, jedoch vor ihrer Umsetzung mit anderen Reaktionspartnern, der Cellulose wenigstens ein Antioxydans in einer Menge von mindestens 0,05%, zugesetzt wurden. Als solche sind beschrieben: Mehrwertige Phenole und/oder mehrwertige Oxycarbonsäuren, Dioxybenzol und/oder Trioxybenzole vorzugsweise Benzcatechin, Resorzin, Pyrogallol oder Gallussäure allein oder in beliebiger Kombination. Dadurch soll der während der Alkalisierung der Cellulose einsetzende oxydative Abbau durch oxydierend wirkende Stoffe verhindert werden.

Zwischen der Erfindung und dem bekannten Verfahren besteht der Unterschied, dass im einen Fall die Cellulose gelöst ist (das bedeutet, dass die intermolekularen Wasserstoffbrückenbindungen zerstört sind) und dass im anderen Falle die Cellulose ungelöst bleibt (das bedeutet, dass die für die Cellulose typische Struktur mit ihren Wasserstoffbindungen zwischen den Polymermolekülen weitgehend erhalten bleibt) oder aber chemisch verändert ist.

Ausserdem ist vorgeschlagen worden, den Polymerabbau der Cellulose beim Löse- und Verarbeitungsprozess durch Zusatz von Citronensäure und/oder Glukose zu vermindern (DE-A 3 021 943).

Die dadurch erzielten Verbesserungen bleiben aber deutlich hinter den mit dem erfindungsgemässen Verfahren erhaltenen Ergebnissen zurück.

Als tertiäre Aminoxide kommen alle diejenigen in Betracht, die Cellulose zu lösen vermögen und die gegenüber Wasser stabil sind. Beispiele hierfür sind Dimethyläthanolaminoxid, Triäthylaminoxid, bestimmte monocyclische N-Methylamin-N-oxide, wie N-Methylmorpholin-N-oxid, N-Methylpiperidin-N-oxid, N-Methylhomopiperidin-N-oxid, N-Methylpyrrolidin-N-oxid, sowie andere cyclische Aminoxide, bei denen die Amonoxidgruppe ausserhalb des Ringes liegt, wie Di-N-methylcyclohexylamin-N-oxid und Dimethylhexylamin-N-oxid.

Als besonders geeignet hat sich N-Methylmorpholin-N-oxid (NMMO) erwiesen.

Gegebenenfalls enthält die Form- bzw. Spinnmasse bis zu 25 Gew.-% eines Nichtlösungsmittels, vorzugsweise 10–25 Gew.-%, wobei als Nichtlösungsmittel Wasser, niedrige ein- und mehrwertige Alkohole, Dimethylformamid, Dimethylsulfoxid, höhersiedende Amine, insbesondere das zum tertiären Aminoxid korrespondierende Amin in Frage kommen.

Die Zusatzstoffe gemäss der Erfindung sind neben Glycerinaldehyd organische Verbindungen, die aus wenigstens 4 Kohlenstoffatome und wenigstens zwei konjugierte Doppelbindungen und wenigstens zwei Gruppen und zwar Hydroxyl und/oder Aminogruppen mit wenigstens einem Wasserstoffatom aufgebaut sind.

Eine bevorzugte Ausführungsform der Erfindung ist dadurch gekennzeichnet, dass die Hydroxyl- und/oder Aminogruppen an benachbarte Kohlenstoffatome gebunden sind.

Eine andere bevorzugte Ausführungsform der Erfindung ist dadurch gekennzeichnet, dass die Hydroxyl- und/oder Aminogruppen an die Kohlenstoffatome 1 und 4 gebunden sind.

Bei der erstgenannten Ausführungsform sind vorzugsweise die benachbarten Kohlenstoffatome, die die Hydroxyl- und/oder Aminogruppen tragen, durch eine Doppelbindung verbunden.

Hervorragend geeignete Zusatzstoffe sind solche Endiol-Verbindungen, die in $\alpha$-Stellung durch eine Carbonyl-Doppelbindung stabilisiert sind, die sogenannten Reduktone.

Beispiele für derartige Verbindungen sind L(+)Ascorbinsäure, Isoascorbinsäure, Trioseredukton und Reduktinsäure.

Verbindungen, die dadurch gekennzeichnet sind, dass die vier Kohlenstoffatome und die beiden konjugierten Doppelbindungen Teile eines aromatischen Ringsystems sind, sind ebenfalls als Zusatzstoffe hervorragend geeignet, insbesondere dann, wenn das aromatische Ringsystem ein Benzolkern ist. Solche wirksamen Zusatzstoffe sind Brenzkatechin, Pyrogallol, Gallussäure, Gallussäuremethylester, -äthylester, -propylester, -isopropylester.

Andere hervorragend wirksame Zusatzstoffe sind:

Hydrochinon, 4(Methylamino)phenolsulfat, N-Cyclohexyl-N′-(2-cyanoäthyl)-1,4- Phenylendiamin, N-Cyclohexyl-N′-phenyl-1,4 Phenylendiamin.

Bei den wirksamsten Zusatzstoffen wie beispielsweise Gallussäurepropylester reicht bereits ein Zusatz von 0,01 Gew.-% bezogen auf die Lösungsmittelmenge. Von den erfindungsgemäss beanspruchten Zusatzstoffen müssen jedoch nicht mehr als 0,5 Gew.-% zugesetzt werden, um die volle Wirksamkeit gegen einen Polymerabbau zu erreichen. Die bereits verwendeten Stoffe zur Verhinderung des Polymerabbaues wie Citronensäure und Glucose müssen zu wenigstens 1,5 Gew.-% zugemischt werden, um eine, verglichen mit den erfindungsgemässen Zusatzstoffen, deutlich geringere Wirksamkeit zu erzielen.

Gegenstand der Erfindung ist auch ein Verfahren zur Herstellung der Form- bzw. Spinnmasse, das dadurch gekennzeichnet ist, dass die Cellulose und gegebenenfalls das andere Polymere in einem tertiären Aminoxid, das einen Zusatz der organischen Verbindung und gegebenenfalls bis zu 25 Gew.-% eines Nichtlösungsmittels enthält, bei Temperaturen zwischen 70 und 190 °C bis zur Auflösung der Cellulose gerührt wird.

Bei höheren Konzentrationen der Form- bzw. Spinnmassen an Cellulose ist zweckmässig, auch bei hohen Temperaturen zu arbeiten, was aber erst durch den Einsatz der erfindungsgemässen Zusatzstoffe möglich wurde. Auch in den Fällen, bei denen andere Polymere beigemischt wurden, wird zweckmässig bei hohen Temperaturen also ca. 150 bis 180 °C gearbeitet.

Vor allem dann, wenn die Konzentration der Form- und Spinnmasse an Cellulose nur gering ist und ca. 5–8 Gew.-% beträgt, ist es sinnvoll bei Temperaturen zwischen 70 und 100°C zu arbeiten. Um aber die Verweilzeit möglichst gering zu halten und eine hohe Produktionsleistung zu erhalten, wird vor allem dann, wenn die Form- bzw. Spinnmasse nur Cellulose und keine synthetischen Polymeren enthält, das Verfahren bei Temperaturen zwischen 100 und 150°C durchgeführt. Die optimale Temperatur liegt dabei zwischen 115°C und 130°C.

Da der Zusatzstoff auch nach mehrmaligem Gebrauch noch in vollem Umfange wirksam ist und bei der Abtrennung des Fällmittels aus dem verbrauchten Fällbad im tertiären Aminoxid gelöst bleibt, ist es eine bevorzugte Ausführungsform des erfindungsgemässen Verfahrens, dass das Gemisch aus tertiärem Aminoxid, Nichtlösungsmittel und Zusatzstoff aus dem Fällbad der Formgebung zurückgewonnen wurde.

Das Nichtlösungsmittel der Form- bzw. Spinnmasse und das Fällmittel zur Formgebung sind im allgemeinen identisch. Bevorzugt wird dazu Wasser eingesetzt. Die Abtrennung des überschüssigen Fällmittels erfolgte bisher ohne Beeinträchtigung der Wiederverwendbarkeit durch Verdampfen in einem Dünnschichtverdampfer.

Gegenstand der Erfindung ist weiterhin die Verwendung der Form- bzw. Spinnmasse zur Herstellung von Formkörpern, wie Fäden, Folien oder Membranen in Form von Hohlfäden, Schlauch- oder Flachfolien. Zur Herstellung solcher Formkörper wird die Form- bzw. Spinnmasse in bekannter Weise durch geeignete Düsen in ein Fällbad extrudiert. Als Fällbad kommen solche Flüssigkeiten und Lösungen in Betracht, die mit dem tertiären Aminoxid mischbar sind. Hier sind Wasser, niedere ein- und mehrwertige Alkohole, Ketone, Amine und insbesondere wässrige Lösungen zu nennen. Die genannten Stoffe können für sich oder im Gemisch untereinander eingesetzt werden. Zur Beeinflussung der Koagulation enthält das Fällbad in bevorzugter Weise bis zu 40 Gew.-% tertiäres Aminoxid.
Die folgenden Versuche erläutern die Erfindung:

1. Standardisierter Löse- und Fällprozess

2 g (10%) Cellulose (Type B 800), 0,6 g (3%) Zusatzstoff und 17,4 g (87%) N-Methyl-Morpholinoxid (= NMMO) mit einem Wassergehalt von etwa 13,5 Gew.-%, bezogen auf die Aminoxidmenge, werden sorgfältig vermischt und in einem Glasrohr (Innendurchmesser 22 mm, Länge 170 mm), das mit einem Mantel umgeben ist, durch den auf 150°C gehaltenes Silikonöl strömt, 20 Minuten erhitzt. Während der Dauer der Erhitzung wird mit einem eng in das Rohr eingepassten Schneckenrührer gerührt.

Anschliessend wird die Cellulose in Wasser ausgefällt, mit einem Hochgeschwindigkeitsrührer (Waring Blender) zerkleinert, abgesaugt und mit Wasser gewaschen.

Die gesamte wässrige Phase wird auf unter 300 ml gehalten und für die spektralfotometrische Untersuchung mit Wasser auf 300 ml aufgefüllt.

Die ausgefällte Cellulose wird weiter mit reichlich Wasser und anschliessend mit Aceton gewaschen und schliesslich 24 Stunden bei 60°C im Vakuum-Trockenschrank getrocknet.

2. Polymerisationsgrad der gefällten Cellulose Der Polymerisationsgrad (DP) der Cellulose wird viskosimetrisch an Cellulose-Lösungen in Cuen bei 25°C nach der in der Zeitschrift Papier 10 (1956) Seite 135 beschriebenen Methode bestimmt.

Die Bestimmung der Lösungsviskosität (LV) sowie die Errechnung des DP daraus wird folgendermassen vorgenommen:

DP-Bestimmung an Cellulose

Der Polymerisationsgrad (DP) wird aus der Lösungsviskosität (LV) von Celluloselösungen in Cuen errechnet. Zufriedenstellende Ergebnisse für den DP wurden bei Verwendung eines Ubbelohde-Viskosimeters mit einem Kapillarendurchmesser von 0,87 mm nur im LV-Bereich zwischen 1,5 und 2,5 erhalten. Der DP-Berechnung liegen folgende 2 Beziehungen zugrunde:

$$\left[\eta\right] = \frac{\eta\ \text{red.}}{1 + k.\eta\ \text{spez.}} \qquad \left[\eta\right] = 0,82 \times 10^{-3}\ P_w^{\ 0,9}$$
$$k = 0,29$$

Man erhält hierbei den DP als Gewichtsmittel ($P_w$).

Die nach der Fällung der Cellulose erreichbaren DP-Werte sind in Tabelle I für eine Reihe von Zusatzstoffen zusammengestellt (Standardbedingung).

Es wird weiter der Einfluss der Zusatzstoffe auf den Celluloseabbau bei verschiedenen Konzentrationen verfolgt. In Tabelle IIA und IIB sind die Ergebnisse zusammengefasst.

Bei Gallussäurepropylester und Gallussäure werden zusätzlich Temperatur- und Zeitabhängigkeit des Polymerabbaues sowie der Gewichtsverlust der Cellulose beim Löse- und Fällprozess ermittelt.

Die Ergebnisse sind in den Tabellen III, IV und V zusammengefasst.

3. Farbe des NMMO-haltigen Wasserextraktes

Der weitaus grösste Teil der niedermolekularen, gefärbten Abbauprodukte der Cellulose geht während des Fällprozesses in die Wasserphase über und wird spektralfotometrisch erfasst. Diese Untersuchung macht zwar keine direkten Aussagen über den Zustand des gefällten Polymeren, die Farbe des Extraktes korreliert jedoch in den meisten Fällen mit der des gefällten Polymeren.

Extinktionsmessung der Wasserextrakte.

Die spektralfotometrischen Messungen beziehen sich auf die oben erwähnte wässrige Extraktmenge von 300 ml. Gemessen wird in Glasküvetten mit 10 mm Schichtdicke im Wellenlängenbereich von 300 bis 750 nm. Die Extinktion der Proben wird gegen Wasser gemessen.

Zur Berechnung des Extinktionsquotienten, der der Quotient aus der Extinktion der Probe mit Zusatzstoff und einer gleichbehandelten Probe ohne Zusatzstoff ist, werden die Extinktionswerte bei = 550 nm herangezogen.

Dunklere Extrakte als die der Vergleichsproben führen zu Zahlenwerten > 1, hellere und somit bessere zu solchen < 1. Die Ergebnisse sind aus der letzten Spalte der Tabelle I und IIA zu ersehen.

4. Polymerverlust bei der gefällten Cellulose

Während des Löseprozesses wird die eingesetzte Cellulose oxydativ abgebaut.

Der dabei auftretende Polymerverlust bei der gefällten Cellulose ist bei längerer Lösezeit und/ oder höherer Lösetemperatur teilweise beträchtlich, wie aus den Tabellen IV und V ersichtlich ist.

5. Versuche mit dem Extruder

Mit diesen Versuchen sollte geprüft werden, ob die in Laborversuchen erhaltenen Ergebnisse auch am Extruder erreichbar sind.

Es werden mit einem Doppelschneckenextruder mit Entgasungszone Cellulosemembranen unter Verwendung von Lösungen mit und ohne Zusatzstoff hergestellt.

Die Verarbeitungsbedingungen sind in Tabelle VIA zusammengestellt.

In Tabelle VIB sind die Ergebnisse aufgeführt.

Wegen des nur noch geringen Abbaues der Cellulose bei den Versuchen mit Zusatzstoffen ist die Form- bzw. Spinnmasse höherviskos als eine solche ohne Zusatzstoff bei gleicher Cellulosekonzentration. Die Cellulosekonzentration der Spinnlösung muss daher gegenüber der nicht mit Zusatzstoffen versehenen erniedrigt werden, um übliche Form- bzw. Spinnbedingungen zu erreichen.

6. Herstellung von Dialysemembranen

Ein Gemisch aus 7 bis 25 Gew.-% Cellulose und 75 bis 93 Gew.-% NMMO, jeweils bezogen auf das Gewicht der Spinnlösung, wird in einem Doppelschneckenextruder mit Entgasungszone in maximal 4 Min. bei einer Temperatur von 150°C in Lösung gebracht und durch eine Breitschlitzdüse, Ringschlitzdüse oder Hohlfasendüse extrahiert, gewaschen und nach Zusatz von Weichmacher unter Schrumpfbehinderung bei Temperaturen zwischen 50 und 110°C getrocknet und aufgewickelt.

Diskussion der Ergebnisse:

Aus den Versuchsergebnissen lässt sich folgendes ablesen:

Unter den Standardbedingungen erleidet die Cellulose (Type B 800) ohne Zusatzstoff einen Polymerabbau von DP = 795 auf DP = 185, also um 77% des Ausgangswertes. Mit guten Zusatzstoffen beträgt dagegen der DP-Abfall maximal nur 5 Gew.-%.

Die günstigsten Zusatzstoffkonzentrationen liegen bei Gallussäure, Pyrogallol und L(+)Ascorbinsäure bei 0,5 Gew.-% und bei Gallussäurepropylester sogar nur bei 0,01 Gew.-%, jeweils bezogen auf die Lösungsmittelmenge.

Bei Verwendung von Gallussäure als Zusatzstoff in einer Konzentration von 0,5 Gew.-% kann das Cellulose-Lösungsmittelgemisch (NMMO, Wasser, Gallussäure) mehrfach zum Lösen von Cellulose verwendet werden. Selbst nach fünfmaligem Einsatz des Lösungsmittelgemisches wird die Cellulose nicht stärker abgebaut als beim ersten Einsatz, was bedeutet, dass der Zusatzstoff praktisch nicht verbraucht wird.

Die mehrfache Verwendungsmöglichkeit des Lösungsmittelgemisches stellt einen grossen Vorteil dar.

Selbst bei hohen Lösetemperaturen wird die Cellulose bei den Proben mit Zusatzstoffen nur geringfügig abgebaut (vgl. Tabelle III und IV).

Die Cellulose wird, wenn sie bei hoher Temperatur längere Zeit, d.h. 40 oder 60 Min., gelöst wird, normalerweise stark abgebaut und weist nur noch einen entsprechend niedrigen DP (< 20% des Ausgangs-DP) auf.

Bei Verwendung von Lösungen mit Zusatzstoffen ist im Gegensatz dazu weder ein Zeit- noch ein temperaturabhängiger DP-Verlust zu beobachten. Auch die Polymerverluste sind stets um mindestens 70% niedriger als bei Proben ohne Zusatzstoff (vgl. Tabellen IVA bis D und V).

Gallussäurepropylester verhindert nicht nur den Polymerabbau fast vollständig, sondern ist auch noch in sehr geringen Konzentrationen wirksam.

Zu diesen Vorzügen kommt noch, dass die Farbe der Lösung und des Extraktes sehr hell ist.

Die im Labor gefundenen Ergebnisse lassen sich am Extruder bestätigen. Eine gewisse Schwierigkeit stellt allerdings die sehr hohe Viskosität der Cellulose-Lösungen mit Zusatzstoffen dar. 20%ige Lösungen, die normalerweise noch gut zu Membranen zu vergiessen sind, können mit Zusatzstoffen nur bei höheren Temperaturen verarbeitet werden, was aber wegen des erfindungsgemässen Zusatzstoffes ohne Schwierigkeiten möglich wurde.

Bei Spinnversuchen für hochfeste Fäden unter Verwendung von Form- bzw. Spinnmassen mit Gallussäure als Zusatzstoff beträgt der DP der Fäden trotz der um 40°C höheren Verarbeitungstemperatur und der verzehnfachten Verweilzeit noch 650.

Gemahlener Buchensulfitzellstoff (Type B 800) mit einem Ausgangs-DP von 795 wird unter Standardbedingungen normalerweise auf einen DP von 185 abgebaut und ist deshalb für die Herstellung von hochwertigen Fäden, Folien oder Membranen bisher als ungeeignet angesehen worden.

Bei Verwendung einer Lösung mit Gallussäurepropylester als Zusatzstoff wird dagegen der Abbau auf einen DP von 787 reduziert, so dass nunmehr sogar die Herstellung von hochfesten Fäden aus minderwertiger Zellstofftype möglich wurde.

Gemahlener Fichtensulfitzellstoff (Type FDY 600) weist einen Ausgangs-DP von 1535 auf.

Unter Standardbedingungen wird dieser normalerweise auf einen DP von 237 reduziert, bei Verwendung einer Lösung mit Gallussäure als Zusatzstoff wird dagegen der DP nur auf 1244 herabgesetzt.

Tabelle I:

| Zusatzstoff | Konzentration bei LV-Messung $\left[\dfrac{g}{l}\right]$ | Lösungsviskosität LV | Grenzviskosität $[\eta]$ | Polymerisationsgrad $P_w$ | Extinktionsquotient bei $= 550$ nm |
|---|---|---|---|---|---|
| Gallussäurepropylester | 1,67 | 1,657 | 0,331 | 786,6 | 0,26 |
| Gallussäure | 1,67 | 1,611 | 0,391 | 742,5 | 0,74 |
| Pyrogallol | 1,67 | 1,533 | 0,301 | 703,6 | 1,42 |
| L(+)Ascorbinsäure | 5,0 | 3,399 | 0,233 | 662,1 | 5,44 |
| DL Glycerinaldehyd | 5,0 | 3,042 | 0,257 | 592,3 | 13,0 |
| N-Cyclohexyl-N'-isopropyl-1,4-phenylendiamin | 2,5 | 1,754 | 0,248 | 569,3 | 1,24 |
| 1,4-Phenylendiamin | 5,0 | 2,857 | 0,241 | 553,7 | 0,33 |
| N-Cyclohexyl-N'-phenyl-1,4-Phenylendiamin | 5,0 | 2,752 | 0,232 | 530,5 | 0,43 |
| Hydrochinon | 5,0 | 2,671 | 0,225 | 512,3 | 2,35 |
| 4-Methylamino-phenolsulfat | 5,0 | 2,611 | 0,220 | 493,4 | 0,95 |
| Vergleich ohne Zusatz | 5,0 | 1,517 | 0,09 | 185,0 | 1,00 |
| Vergleich mit Citronensäure | 5,0 | 2,402 | 0,199 | 447,8 | 0,34 |

Tabelle IIA:
Wirksamkeit einiger Zusatzstoffe bei verschiedenen Konzentrationen (Standardbedingungen)

| Zusatzstoffmenge | Konzentration b. LV-Messung g/l | Lösungsviskosität | Grenzviskosität | Polymerisationsgrad $P_w$ | Extinktionsquotient bei 550 nm |
|---|---|---|---|---|---|
| 3,0 Gallussäure | 1,67 | 1,611 | 0,311 | 742,5 | 0,74 |
| 1,0 Gallussäure | 1,67 | 1,532 | 0,277 | 643,8 | 0,73 |
| 0,5 Gallussäure | 1,67 | 1,546 | 0,283 | 660,1 | 0,84 |
| 0,2 Gallussäure | 5,0 | 1,936 | 0,147 | 319,5 | 0,78 |
| 0,1 Gallussäure | 5,0 | 1,539 | 0,0932 | 192,3 | 1,83 |
| 3,0 Pyrogallol | 1,67 | 1,588 | 0,301 | 708,6 | 1,42 |
| 1,0 Pyrogallol | 1,67 | 1,498 | 0,261 | 606,1 | 1,11 |
| 0,5 Pyrogallol | 1,67 | 1,56 | 0,289 | 676,5 | 1,09 |
| 3,0 L(+)Ascorbinsäure | 5,0 | 3,399 | 0,283 | 662,1 | 5,44 |
| 1,0 L(+)Ascorbinsäure | 5,0 | 3,074 | 0,259 | 598,7 | 1,87 |
| 0,5 L(+)Ascorbinsäure | 5,0 | 2,629 | 0,221 | 502,7 | 1,17 |
| 3 Gallussäurepropylester | 1,67 | 1,657 | 0,331 | 786,6 | 0,78 |
| 1 Gallussäurepropylester | 1,67 | 1,565 | 0,291 | 682,1 | 0,23 |
| 0,5 Gallussäurepropylester | 1,67 | 1,624 | 0,317 | 749,5 | 0,30 |
| 0,3 Gallussäurepropylester | 1,67 | 1,618 | 0,314 | 742,7 | 0,44 |
| 0,2 Gallussäurepropylester | 1,67 | 1,611 | 0,311 | 734,8 | 0,47 |
| 0,1 Gallussäurepropylester | 1,67 | 1,601 | 0,307 | 723,4 | 0,34 |
| 0,05 Gallussäurepropylester | 1,67 | 1,621 | 0,316 | 746,1 | 0,34 |
| 0,03 Gallussäurepropylester | 1,67 | 1,603 | 0,3079 | 725,7 | 0,45 |
| 0,01 Gallussäurepropylester | 1,67 | 1,607 | 0,3097 | 730,2 | 0,53 |

Tabelle IIB:
Mehrmaliges Verwenden von NMMO mit 0,5 Gew.-% Gallussäure als Zusatzstoff.

| Lösetemperatur °C | Lösezeit in Min. | Konzentration $\left[\dfrac{g}{l}\right]$ | Lösungs-viskosität | $[\eta]$ | $P_w$ |
|---|---|---|---|---|---|
| 150 | 20 | 5 | 2,808 | 0,237 | 543,0 |
| 150 | 20 | 5 | 2,955 | 0,250 | 574,4 |
| 150 | 20 | 5 | 2,820 | 0,238 | 545,8 |
| 150 | 20 | 5 | 3,144 | 0,264 | 612,6 |
| 150 | 20 | 5 | 2,799 | 0,236 | 540,9 |
| 170 | 60 | 5 | 2,108 | 0,168 | 369,4 |

Tabelle III:
Temperaturabhängigkeit des Polymerabbaues mt 0,5 Gew.-% und ohne Gallussäure bei 20 Min. Versuchsdauer.

| Heizbad-temperatur °C | Zusatz-stoff | Konz. $\left[\dfrac{g}{l}\right]$ | Lösungs-viskosität | $[\eta]$ | $P_w$ | Polymer-verlust in % |
|---|---|---|---|---|---|---|
| 150 | — | 5 | 1,567 | 0,097 | 201,9 | 14,6 |
| 150 | + | 5 | 3,754 | 0,306 | 721,1 | 3,6 |
| 160 | — | 5 | 1,459 | 0,081 | 164,6 | 7,6 |
| 160 | + | 5 | 3,358 | 0,280 | 653,1 | 4,2 |
| 170 | — | 5 | 1,495 | 0,087 | 177,0 | 10,7 |
| 170 | + | 5 | 3,283 | 0,275 | 639,2 | 3,6 |
| 180 | — | 5 | 1,379 | 0,068 | 136,1 | 9,6 |
| 180 | + | 5 | 3,198 | 0,269 | 623,0 | 3,6 |

Tabelle IVA:
Zeitabhängigkeit des Polymerabbaues mit 0,5 Gew.-% und ohne Gallussäure bei 180°C Heiztemperatur.

| Versuchs-dauer in Min. | Zusatz-stoff | Konz. $\left[\dfrac{g}{l}\right]$ | Lösungs-viskosität | $[\eta]$ | $P_w$ | Polymer-verlust in % |
|---|---|---|---|---|---|---|
| 20 | — | 5 | 1,379 | 0,068 | 136,1 | 9,6 |
| 20 | + | 5 | 3,198 | 0,269 | 623,0 | 3,4 |
| 40 | — | 5 | 1,528 | 0,042 | 188,6 | 29,5 |
| 40 | + | 5 | 3,512 | 0,291 | 681,3 | 11,2 |
| 60 | — | 8 | 1,651 | 0,069 | 136,6 | etwa 35 |
| 60 | + | 3,33 | 1,867 | 0,208 | 468,7 | etwa 10 |

Tabelle IVB:
wie IVA, aber bei 170°C Heizbadtemperatur

| Versuchs-dauer in Min. | Zusatz-stoff | Konz. $\left[\dfrac{g}{l}\right]$ | Lösungs-viskosität | $[\eta]$ | $P_w$ | Polymer-verlust in % |
|---|---|---|---|---|---|---|
| 20 | — | 5 | 1,495 | 0,087 | 177,0 | 10,7 |
| 20 | + | 5 | 3,283 | 0,275 | 639,2 | 3,6 |
| 40 | — | 5 | 1,383 | 0,069 | 137,6 | 17,9 |
| 40 | + | 5 | 3,133 | 0,264 | 610,4 | 11,2 |
| 60 | — | 10 | 1,958 | 0,075 | 151,0 | |
| 60 | + | 3,33 | 2,034 | 0,239 | 546,6 | |

Tabelle IVC:
wie IVA, aber bei 160 °C Heizbadtemperatur

| Versuchs-dauer in Min. | Zusatz-stoff | Konz. $\left[\frac{g}{l}\right]$ | Lösungs-viskosität | $[\eta]$ | $P_w$ | Polymer-verlust in % |
|---|---|---|---|---|---|---|
| 20 | — | 5 | 1,459 | 0,081 | 164,6 | 7,6 |
| 20 | + | 5 | 3,358 | 0,280 | 653,1 | − 4,2 |
| 40 | — | 5 | 1,499 | 0,087 | 178,6 | 15,7 |
| 40 | + | 5 | 2,95 | 0,249 | 573,4 | 3,6 |
| 60 | — | 10 | 1,867 | 0,069 | 153,2 | |
| 60 | + | 1,67 | 1,470 | 0,248 | 571,0 | |

Tabelle IVD:
wie IVA, aber bei 150 °C Heizbadtemperatur

| Versuchs-dauer in Min. | Zusatz-stoff | Konz. $\left[\frac{g}{l}\right]$ | Lösungs-viskosität | $[\eta]$ | $P_w$ | Polymer-verlust in % |
|---|---|---|---|---|---|---|
| 20 | — | 5 | 1,567 | 0,097 | 201,9 | 14,6 |
| 20 | + | 5 | 3,754 | 0,306 | 729,1 | 3,6 |
| 40 | — | 5 | 1,476 | 0,084 | 170,6 | 9,1 |
| 40 | + | 5 | 3,279 | 0,274 | 638,4 | 0,8 |
| 60 | — | 5 | 1,453 | 0,080 | 162,5 | |
| 60 | + | 3,33 | 2,14 | 0,257 | 596,1 | |

Tabelle V:
Zeitabhängigkeit des Polymerabbaues mit 0,5 Gew.-% und ohne Gallus-säure bei 180°C Heizbadtemperatur

| Versuchs-dauer in Min. | Zusatz-stoff | Konz. $\left[\frac{g}{l}\right]$ | Lösungs-viskosität | $[\eta]$ | $P_w$ | Polymer-verlust in % |
|---|---|---|---|---|---|---|
| 20 | + | 2 | 1,816 | 0,330 | 783,4 | 5,8 |
| 20 | — | 5 | 1,529 | 0,092 | 188,9 | 15,2 |
| 40 | + | 2 | 1,773 | 0,316 | 746,1 | 5,8 |
| 40 | — | 5 | 1,496 | 0,087 | 177,5 | 35,5 |
| 60 | + | 2 | 1,803 | 0,326 | 772,2 | 12,9 |
| 60 | — | 5 | 1,463 | 0,082 | 166,0 | 32,8 |

Tabelle VIA:

| Ver-such | Cellulose-konzentration der Lösung in Gew.-% | Zusatz-stoff | Extruder-drehzahl (Min.$^{-1}$) | Extruder-temperatur | Spinnpum-pen Förder-menge ml/Min. | Druck hin-ter Spinn-pumpe bar | Düsen-schlitzweite (μ) | Abzugs-geschw. (m/Min.) |
|---|---|---|---|---|---|---|---|---|
| 52 A/B | 20% Type B 800 | 3% As-corbin-säure | 150 | 100/120 | 15,8–31,6 | 100 | Lösung zu viskos. bei Extrudertemp. nicht verspinnbar | |
| 52 C | 10% Type B 800 | 1,5% Ascor-binsäure | 250 | 120 | 31,6 | > 10 | 200 | 2,2 |
| 53 | 15% Type B 800 | 1,5% Ascor-binsäure | 290 | 100 | 31,6 | 12 | 200 | 2,2 |

Tabelle VIB:

| Versuch | Dicke µm nass | %ATRO | Bruchlast längs nass cN/tex | Bruchdehnung längs nass % | Lösungsviskosität in Cuen C in g/l  LV | | Grenzviskosität [η] | Polymerisationsgrad $P_w$ |
|---|---|---|---|---|---|---|---|---|
| 52 A | | | | | 5 | 2,958 | 0,25 | 575,6 |
| 52 B | | | | | 2,5 | 1,778 | 0,254 | 585,1 |
| 52 C | 80 | 23 | ca. 1000 | ca. 30 | 2,5 | 1,887 | 0,282 | 659,1 |
| 53 | 70 | 31,5 | 1552 | 17,9 | 3 | 2,094 | 0,277 | 645,4 |
| | | | DP der Ausgangscellulose: | | | | | 795 |

**Patentansprüche für die Vertragsstaaten: BE, CH, FR, GB, IT, LI, LU, NL, SE**

1. Form- bzw. Spinnmasse bestehend aus 4,99–25 Gew.-% Cellulose, 95–50 Gew.-% eines tertiären Aminoxids, gegebenenfalls bis 25 Gew.-% Nichtlösungsmittel und bis zu 10 Gew.-% anderen Polymeren jeweils bezogen auf das Gewicht der Form- bzw. Spinnmasse, dadurch gekennzeichnet, dass die Form- bzw. Spinnmasse als Zusatzstoff einzeln oder im Gemisch organische Verbindungen, die wenigstens 4 Kohlenstoffatome und wenigstens zwei konjugierte Doppelbindungen und wenigstens zwei Gruppen und zwar Hydroxyl- und/oder Aminogruppen mit wenigstens einem Wasserstoffatom besitzen, und/oder Glycerinaldehyd enthält.

2. Form- bzw. Spinnmasse nach Anspruch 1, dadurch gekennzeichnet, dass die Hydroxyl- und/oder Aminogruppen an benachbarte Kohlenstoffatome gebunden sind.

3. Form- bzw. Spinnmasse nach Anspruch 1, dadurch gekennzeichnet, dass die Hydroxyl- und/oder Aminogruppen an die Kohlenstoffatome 1 und 4 gebunden sind.

4. Form- bzw. Spinnmasse nach Anspruch 2, dadurch gekennzeichnet, dass die benachbarten Kohlenstoffatome durch eine Doppelbindung verbunden sind.

5. Form- bzw. Spinnmasse nach Anspruch 4, dadurch gekennzeichnet, dass die andere Doppelbindung eine Carbonyldoppelbindung ist.

6. Form- bzw. Spinnmasse gemäss Anspruch 5, dadurch gekennzeichnet, dass die organische Verbindung L(+) Ascorbinsäure ist.

7. Form- bzw. Spinnmasse nach Anspruch 1, dadurch gekennzeichnet, dass die vier Kohlenstoffatome und die beiden konjugierten Doppelbindungen Teile eines aromatischen Ringsystems sind.

8. Form- bzw. Spinnmasse nach Anspruch 7, dadurch gekennzeichnet, dass das aromatische Ringsystem ein Benzolkern ist.

9. Form- bzw. Spinnmasse nach Anspruch 8 und 2, dadurch gekennzeichnet, dass die organische Verbindung Brenzkatechin, Pyrogallol, Gallussäure, Gallussäuremethylester, -äthylester, -propylester, -isopropylester ist.

10. Form- bzw. Spinnmasse nach Anspruch 8 und 3, dadurch gekennzeichnet, dass die organische Verbindung Hydrochinon, 4(Methylamino)-phenolsulfat, N-Cyclohexyl-N'-(2-cyanoäthyl)-1,4-Phenylendiamin, N-Cyclohexyl-N'-phenyl-1,4 Phenylendiamin ist.

11. Form- bzw. Spinnmasse gemäss Ansprüchen 1–10, dadurch gekennzeichnet, dass sie 0,01 bis 0,5 Gew.-% der organischen Verbindung, bezogen auf die Lösungsmittelmenge enthält.

12. Verfahren zur Herstellung der Form- bzw. Spinnmasse nach den Ansprüchen 1–11, dadurch gekennzeichnet, dass die Cellulose und gegenenfalls das andere Polymere in einem tertiären Aminoxid, das einen Zusatz der organischen Verbindung und gegebenenfalls bis zu 25 Gew.-% eines Nichtlösungsmittels enthält, bei Temperaturen zwischen 70 und 190 °C bis zur Auflösung der Polymeren gerührt wird.

13. Verfahren nach Anspruch 12, dadurch gekennzeichnet, dass die Temperatur zwischen 100 und 150 °C liegt.

14. Verfahren nach Anspruch 13, dadurch gekennzeichnet, dass die Temperatur zwischen 115 und 130 °C liegt.

15. Verfahren nach den Ansprüchen 12–14, dadurch gekennzeichnet, dass das Gemisch aus tertiärem Aminoxid, Nichtlösungsmittel und Zusatzstoff aus dem Fällbad der Formgebung zurückgewonnen wurde.

16. Verwendung der Form- bzw. Spinnmassen gemäss Ansprüchen 1–11 zur Herstellung von Formkörpern wie Fäden, Folien oder Membranen.

**Patentansprüche für den Vetragsstaat: AT**

1. Verfahren zur Herstellung der Form- bzw. Spinnmasse aus 4,99–25 Gew.-% Cellulose, 95–50 Gew.-% eines tertiären Aminoxids, gegebenenfalls bis 25 Gew.-% Nichtlösungsmittel und bis zu 10 Gew.-% anderen Polymeren jeweils bezogen auf das Gewicht der Form- bzw. Spinnmasse, dadurch gekennzeichnet, dass die Cellulose und gegebenenfalls das andere Polymere mit einem tertiären Aminoxid, welches gegebenenfalls bis zu 25 Gew.-% eines Nichtlösungsmittels enthält, zusammen mit organischen Verbindungen, die wenigstens 4 Kohlenstoffatome und wenigstens zwei konjugierte Doppelbindungen und wenigstens zwei Gruppen und zwar Hydroxyl- und/oder Aminogruppen mit wenigstens einem Wasserstoffatom besitzen, und/oder Glycerinaldehyd einzeln oder im Gemisch bei Temperaturen zwischen 70 und 190 °C bis zur Auflösung der Polymeren gerührt wird.

2. Verfahren nach Anspruch 1, dadurch gekennzeichnet, dass die Hydroxyl- und/oder Aminogruppen der organischen Verbindung an benachbarte Kohlenstoffatome gebunden sind.

3. Verfahren nach Anspruch 1, dadurch gekennzeichnet, dass die Hydroxyl- und/oder Aminogruppen der organischen Verbindung an die Kohlenstoffatome 1 und 4 gebunden sind.

4. Verfahren nach Anspruch 2, dadurch gekennzeichnet, dass die benachbarten Kohlenstoffatome durch eine Doppelbindung verbunden sind.

5. Verfahren nach Anspruch 4, dadurch gekennzeichnet, dass die andere Doppelbindung eine Carbonyldoppelbindung ist.

6. Verfahren gemäss Anspruch 5, dadurch gekennzeichnet, dass die organische Verbindung L(+) Ascorbinsäure ist.

7. Verfahren nach Anspruch 1, dadurch gekennzeichnet, dass die vier Kohlenstoffatome der organischen Verbindung und die beiden konjugierten Doppelbindungen Teile eines aromatischen Ringsystems sind.

8. Verfahren nach Anspruch 7, dadurch gekennzeichnet, dass das aromatische Ringsystem ein Benzolkern ist.

9. Verfahren nach Anspruch 8 und 2, dadurch gekennzeichnet, dass die organische Verbindung Brenzkatechin, Pyrogallol, Gallussäure, Gallussäuremethylester, -äthylester, -propylester, -isopropylester ist.

10. Verfahren nach Anspruch 8 und 3, dadurch gekennzeichnet, dass die organische Verbindung Hydrochinon, 4(Methylamino)phenolsulfat, N-Cyclohexyl-N'-phenyl-1,4 Phenylendiamin ist.

11. Verfahren gemäss Ansprüchen 1–10, dadurch gekennzeichnet, dass 0,01 bis 0,5 Gew.-% der organischen Verbindung, bezogen auf die Lösungsmittelmenge zugesetzt werden.

12. Verfahren nach den Ansprüchen 1–11, dadurch gekennzeichnet, dass die Temperatur zwischen 100 und 150 °C liegt.

13. Verfahren nach Anspruch 12, dadurch gekennzeichnet, dass die Temperatur zwischen 115 und 130 °C liegt.

14. Verfahren nach den Ansprüchen 1–13, dadurch gekennzeichnet, dass das Gemisch aus tertiärem Aminoxid, Nichtlösungsmittel und Zusatzstoff aus dem Fällbad der Formgebung zurückgewonnen wird.

15. Verwendung der nach den Ansprüchen 1–14 erhaltenen Form- bzw. Spinnmassen zur Herstellung von Formkörpern wie Fäden, Folien oder Membranen.

**Claims for the Contracting states: BE, CH, FR, GB, IT, LI, LU, NL, SE**

1. A molding or spinning composition consisting of from 4.99 to 25% by weight of cellulose, from 95 to 50% by weight of a tertiary amine oxide, optionally up to 25% by weight of non-solvent and up to 10% by weight of other polymers, based in each case on the weight of the molding or spinning composition, characterized in that the molding or spinning composition contains as additive, either individually or in admixture, organic compounds containing at least 4 carbon atoms and at least 2 conjugated double bonds and at least 2 groups, namely hydroxyl and/or amino groups with at least 1 hydrogen atom, and/or glycerin aldehyde.

2. A molding or spinning composition as claimed in Claim 1, charachterized in that the hydroxyl and/or amino groups are attached to adjacent carbon atoms.

3. A molding or spinning composition as claimed in Claim 1, characterized in that the hydroxyl and/or amino groups are attached to carbon atoms 1 and 4.

4. A molding or spinning composition as claimed in Claim 2, characterized in that the adjacent carbon atoms are attached by a double bond.

5. A molding or spinning composition as claimed in Claim 4, characterized in that the other double bond is a carbonyl double bond.

6. A molding or spinning composition as claimed in claim 5, characterized in that the organic compound L(+) is ascorbic acid.

7. A molding or spinning composition as claimed in Claim 1, characterized in that the 4 carbon atoms and the 2 conjugated double bonds are parts of an aromatic ring system.

8. A molding or spinning composition as claimed in Claim 7, characterized in that the aromatic ring system is a benzene ring.

9. A molding or spinning composition as claimed in Claims 8 and 2, characterized in that the organic compound is pyrocatechol, pyrogallol, gallic acid, gallic acid methyl ester, ethyl ester, propyl ester, isopropyl ester.

10. A molding or spinning composition as claimed in Claims 8 and 3, characterized in that the organic compound is hydroquinone, 4-(methylamino)-phenol sulfate, N-cyclohexyl-N'-(2-cyanoethyl)-1,4-phenylene diamine, N-cyclohexyl-N'-phenyl-1,4-phenylene diamine.

11. A molding or spinning composition as claimed in Claims 1 to 10, characterized in that it contains from 0.01 to 0.5% by weight of the organic compound, based on the quantity of solvent.

12. A process for producing the molding or spinning composition claimed in Claims 1 to 11, characterized in that the cellulose and, optionally, the other polymer are stirred in a tertiary amine oxide, which contains an addition of the organic compound and optionally up to 25% by weight of a non-solvent, at temperatures of from 70 to 190 °C until the polymers have dissolved.

13. A process as claimed in Claim 12, characterized in that the temperature is in the range from 100 to 150 °C.

14. A process as claimed in Claim 13, characterized in that the temperature is in the range from 115 to 130 °C.

15. A process as claimed in Claims 12 to 14, characterized in that the mixture of tertiary amine oxide, non-solvent and additive was recovered from the precipitation bath used for molding.

16. The use of the molding or spinning compositions claimed in Claims 1 to 11 for the production of molded articles, such as filaments, films or membranes.

**Claims for the Contracting state: AT**

1. A process for the production of a molding or spinning composition consisting of from 4.99 to 25% by weight of cellulose, from 95 to 50% by weight of a tertiary amine oxide, optionally up to 25% by weight of non-solvent and up to 10% by weight of other polymers, based in each case on the weight of the molding or spinning composition, characterized in that the cellulose and, optionally, the other polymer are stirred with a tertiary amine oxide, which optionally contains up to 25% by weight of a non-solvent, together with organic compounds which contain at least 4 carbon atoms and at least 2 conjugated double bonds and at least 2 groups, namely hydroxyl and/or amino groups, containing at least 1 hydrogen atom and/or with glyceric aldehyde either individually in or admixture at temperatures of from 70 to 190 °C until the polymers have dissolved.

2. A process as claimed in Claim 1, characterized in that the hydroxyl and/or amino groups of the organic compound are attached to adjacent carbon atoms.

3. A process as claimed in Claim 1, characterized in that the hydroxyl and/or amino groups of the organic compound are attached to carbon atoms 1 and 4.

4. A process as claimed in Claim 2, characterized in that the adjacent carbon atoms are attached by a double bond.

5. A process as claimed in Claim 4, characterized in that the other double bond is a carbonyl double bond.

6. A process as claimed in Claim 5, characterized in that the organic compound is L(+) ascorbic acid.

7. A process as claimed in Claim 1, characterized in that the four carbon atoms of the organic compound and the two conjugated double bonds are parts of an aromatic ring system.

8. A process as claimed in Claim 7, characterized in that the aromatic ring system is a benzene ring.

9. A process as claimed in claims 8 and 2, characterized in that the organic compound is pyrocatechol, pyrogallol, gallic acid, gallic acid methyl ester, ethyl ester, propyl ester, isopropyl ester.

10. A process as claimed in Claims 8 and 3, characterized in that the organic compound is hydroquinone, 4-(methylamino)-phenol sulfate, N-cyclohexyl-N'-phenyl-1,4-phenylene diamine.

11. A process as claimed in Claims 1 to 10, characterized in that the organic compound is added in a quantity of from 0.01 to 0.5% by weight, based on the quantity of solvent.

12. A process as claimed in Claims 1 to 11, characterized in that the temperature is in the range from 100 to 150 °C.

13. A process as claimed in Claim 12, characterized in that the temperature is in the range from 115 to 130 °C.

14. A process as claimed in Claims 1 to 13, characterized in that the mixture of tertiary amine oxide, non-solvent and additive is recovered from the precipitation bath used for molding.

15. The use of the molding or spinning compositions obtained by the process claimed in Claims 1 to 14 for the production of molded articles, such as filaments, films or membranes.

**Revendications pour les Etats contractants BE, CH, FR, GB, IT, LI, LU, NL, SE**

1. Masse à mouler ou à filer constituée de 4,99–25% en poids de cellulose, 95–50% en poids d'un amino-oxyde tertiaire, le cas échéant jusqu'à 25% en poids de non-solvant et jusqu'à 10% en poids d'autres polymères, rapporté chaque fois au poids de la masse à mouler ou à filer, caractérisée en ce que la masse à mouler ou à filer contient comme adjuvant, séparément ou en mélange, des composés organiques, qui possèdent au moins 4 atomes de carbone et au moins deux doubles liaisons conjuguées et au moins deux groupes, et plus précisément, des groupes hydroxyle et/ou amino avec au moins un atome d'hydrogène, et/ou de l'aldéhyde glycérique.

2. Masse à mouler ou à filer selon la revendication 1, caractérisée en ce que les groupes hydroxyle et/ou amino sont fixés sur des atomes de carbone voisins.

3. Masse à mouler ou à filer selon la revendication 1, caractérisée en ce que les groupes hydroxyle et/ou amino sont fixés sur les atomes de carbone 1 et 4.

4. Masse à mouler ou à filer selon la revendication 2, caractérisée en ce que les atomes de carbone voisins sont liés par une double liaison.

5. Masse à mouler ou à filer selon la revendication 4, caractérisée en ce que l'autre double liaison est une double liaison carbonyle.

6. Masse à mouler ou à filer selon la revendication 5, caractérisée en ce que le composé organique est l'acide ascorbique L(+).

7. Masse à mouler ou à filer selon la revendication 1, caractérisée en ce que les quatre atomes de carbone et les deux doubles liaisons conjuguées sont des parties d'un système cyclique aromatique.

8. Masse à mouler ou à filer selon la revendication 7, caractérisée en ce que le système cyclique aromatique est un noyau benzénique.

9. Masse à mouler ou à filer selon les revendications 8 et 2, caractérisée en ce que le composé organique est la pyrocatéchine, le pyrogallol, l'acide gallique, l'ester méthylique, éthylique, propylique, isopropylique de l'acide gallique.

10. Masse à mouler ou à filer selon les revendications 8 et 3, caractérisée en ce que le composé organique est l'hydroquinone, le sulfate de 4 (méthylamino) phénol, la N-cyclohexyl-N'(2-cyanéthyl)-1,4-phénylènediamine, la N-cyclohexyl-N'-phényl-1,4-phénylènediamine.

11. Masse à mouler ou à filer selon les revendications 1 à 10, caractérisée en ce qu'elle contient de 0,01 à 0,5% en poids du composé organique, rapporté à la quantité de solvant.

12. Procédé de préparation de masse à mouler ou à filer selon les revendications 1 à 11, caractérisée en ce que la cellulose et le cas échéant l'autre polymère est agitée à des températures comprises entre 70 et 190°C jusqu'à dissolution des polymères dans un amino-oxyde tertiaire qui contient une addition de composé organique et le cas échéant jusqu'à 25% en poids d'un non-solvant.

13. Procédé selon la revendication 12, caractérisé en ce que la température se situe entre 100 et 150°C.

14. Procédé selon la revendication 13, caractérisé en ce que la température se situe entre 115 et 130°C.

15. Procédé selon les revendications 12 à 14, caractérisé en ce que le mélange d'amino-oxyde tertiaire, de non solvant et d'adjuvant est récupéré du bain de précipitation de la mise en forme.

16. Utilisation des masses à mouler ou à filer selon les revendications 1 à 11, pour préparer des corps formés comme les fils, feuilles ou membranes.

**Revendications pour l'Etats contractant: AT**

1. Procédé de préparation de masse à mouler ou à filer constituée de 4,99–25% en poids de cellulose, 95–50% en poids d'un amino-oxyde tertiaire, le cas échéant jusqu'à 25% en poids de non-solvant et jusqu'à 10% en poids d'autres polymères, rapporté chaque fois au poids de la masse à mouler ou à filer, caractérisé en ce que la cellulose et le cas échéant l'autre polymère, avec un amino-oxyde tertiaire, qui contient éventuellement jusqu'à 25% en poids d'un non-solvant, est agitée simultanément avec des composés organiques, qui possèdent au moins 4 atomes de carbone et au moins deux doubles liaisons conjuguées et au moins deux groupes, et plus précisément des groupes hydroxyle et/ou les groupes amino avec au moins un atome d'hydrogène, et/ou de l'aldéhyde glycérique, séparément ou en mélange, à des températures comprises entre 70 et 190°C jusqu'à dissolution des polymères.

2. Procédé selon la revendication 1, caractérisé par le fait que les groupes hydroxyle et/ou amino du composé organique sont fixés sur des atomes de carbone voisins.

3. Procédé selon la revendication 1, caractérisé par le fait que les groupes hydroxyle et/ou amino du composé organique sont fixés sur les atomes de carbone 1 et 4.

4. Procédé selon la revendication 2, caractérisé par le fait que les atomes de carbone voisins sont liés par une double liaison.

5. Procédé selon la revendication 4, caractérisé par le fait que l'autre double liaison est une double liaison carbonyle.

6. Procédé selon la revendication 5, caractérisé par le fait que le composé organique est l'acide ascorbique L (+).

7. Procédé selon la revendication 1, caractérisé par le fait que les quatre atomes de carbone du composé organique et les deux doubles liaisons conjuguées sont des parties d'un système cyclique aromatique.

8. Procédé selon la revendication 7, caractérisé par le fait que le système cyclique aromatique est un noyau benzénique.

9. Procédé selon les revendications 8 et 2, caractérisé par le fait que le composé organique est la pyrocatéchine le pyrogallol, l'acide gallique, l'ester méthylique, éthylique, propylique, isopropylique de l'acide gallique.

10. Procédé selon les revendications 8 et 3, caractérisé par le fait que le composé organique est l'hydroquinone, le sulfate de 4 (méthylamino) phénol, la N-cyclohexyl-N′-phényl-1,4-phénylène-diamine.

11. Procédé selon les revendications 1 à 10, caractérisé par le fait qu'on ajoute 0,01 à 0,5% en poids du composé organique, rapporté à la quantité de solvant.

12. Procédé selon les revendications 1 à 11, caractérisé par le fait que la température se situe entre 100 et 150°C.

13. Procédé selon la revendication 12, caractérisé par le fait que la température est comprise entre 115 et 130°C.

14. Procédé selon les revendications 1 à 13, caractérisé par le fait que le mélange d'amino-oxyde tertiaire de non-solvant et d'adjuvant est récupéré du bain de précipitation de la mise en forme.

15. Utilisation des masses à mouler ou à filer obtenues selon les revendications 1 à 14 pour préparer des corps formés tels que fils, feuilles ou membranes.